# EUROPEAN PATENT SPECIFICATION

(11) **EP 0 919 358 B1**
(45) Date of publication and mention of the grant of the patent: **04.09.2002**
(21) Application number: 98309775.9
(22) Date of filing: 30.11.1998
(51) Int. Cl.: B29C 65/02, B23K 20/18

(54) **Method of sealing hollow structured sheets**
Dichtungsverfahren von hohlen strukturierten Schichten
Méthode d'étanchéification de feuilles creuses structurées

(30) Priority: 02.12.1997 GB 9725488
(43) Date of publication of application: 02.06.1999
(73) Proprietor: Hansen, Ulla, 2800 Lyngby (DK); ANDERSEN, Irma, DK-9260 Gistrup (DK)
(72) Inventor: Hansen, Flemming, Southampton SO16 7FB (GB); Jensen, Jörgen, 9260 Gistrup (DK)
(74) Representative: Lomas, Geoffrey Michael

(56) References cited:
- EP-A- 0 566 338
- EP-A- 0 839 641
- CH-A- 688 581

## Description

This invention relates to the sealing of openings in or associated with at least one hollow structured sheet of the kind comprising a plurality of spaced-apart parallel walls and a plurality of spaced-apart ribs which serve to maintain the spatial relationship between the walls, the spaced-apart ribs and the inner surfaces of the walls defining flutes. Such sheets are normally made from polypropylene or polyethylene or either of these materials mixed with a talc filler, or of PVC or polycarbonate, and are generally extruded, as an integral body. The ribs are usually in the form of webs which generally extend in planes that are normal to the planes of the walls, but at least one web may extend in a plane inclined at an acute angle to said planes if desired.

Such hollow structured sheets have the characteristics of strength and light weight which make them attractive for many applications, for example, packaging and conservatory roofing.

However, such structured sheets have up to now had the disadvantage that it has been difficult to seal the openings which lead into the flutes, around the margin of the structured sheet. This process of sealing the flutes is important if the hollow sheet material is to be used by the food industry because the material must be capable of being washed clean. If the openings are not fully sealed, the washing process may not achieve adequate washing of contaminated flutes. This will inevitably encourage bacterial growth.

When polycarbonate structured sheet is used for conservatory roofing it is desirable to seal at least one end of the flutes to prevent the ingress of dust and/or water which can lead to unsightly dirt-containing flutes or algae-containing flutes.

Push-on plastics capping or the use of adhesive tape over the openings is known, but these often split in time due to the extremes of weather conditions to which the conservatory is exposed.

US 4515648 discloses a method of sealing hollow structured sheets of the type set forth which comprises first heating an end face of a hollow structured sheet and a resin tape to the thermoplastic state and then joining the sheet and the tape under pressure. Such a method results in several important problems including that of having to handle the melted resin tape before application and that of applying the melted resin tape to the sheet to ensure a good seal of the openings. The method of the present invention overcomes these problems.

We have developed a method for ensuring a microscopic sealing of openings in or associated with such hollow structured sheets.

According to a first aspect of the invention there is provided a method of sealing openings in or associated with a hollow structured sheet of the kind comprising a plurality of spaced-apart parallel walls and a plurality of spaced-apart ribs which serve to maintain the spatial relationship between the walls, the spaced-apart ribs and the inner surfaces of the walls defining flutes characterised in that the openings are sealed by simultaneously heating a portion of sealing material and urging the portion of sealing material and the sheet relatively together.

When the openings open to the margin of the structured sheet, the sealing material and the structured sheet are urged relatively together by a holding force acting substantially normally of the margin.

Preferably the openings are defined by a surrounding mouth surface. Preferably the sealing material is welded onto the mouth surface of the opening, or into the opening or a combination of both. Preferably the method comprises the following steps:
positioning either the structured sheet or the sealing material or both so that the openings are substantially covered by the material,
activating welding means so as to heat said sealing material and weld said sealing material across and/or into the openings.

Preferably the openings to be sealed comprise those openings which lie at the distal ends of the flutes.

Preferably a plurality of structured sheets are sealed simultaneously.

Preferably the structured sheets are positioned in register with one another.

Preferably the flutes of adjacent sheets are at different orientations.

Preferably a heated platen is used to seal the openings. Alternatively the means for sealing the openings may comprise a heated wheel.

Cooling means may be provided for rapidly cooling the welded joint after welding. The cooling means may comprise a source of cold air.

When a heated platen is used, preferably there is positioned between said sealing material and said heated platen a portion of protective material which ensures that melted sealing material does not come into contact with the platen, the protective material being of a suitable material that does not melt at the operating temperature of the heated platen.

The protective material is preferably left in position against the structured sheet for a predetermined time whilst the sealing material sets, following removal of the heated platen.

Alternatively the platen may be coated with a suitable non-stick material, preferably polytetrafluoroethylene, PTFE.

Preferably the sealing material is of substantially the same chemical composition as that of the structured sheet.

Preferably the platen is heated to at least 165°C when the structured sheet is of polypropylene, and to at least 250°C for polycarbonate.

Preferably the protective material is polyimid when the protective material is an independent sheet.

The invention will now be further described, by way of example only, with reference to the accompanying drawings, in which:-
**Figure 1** shows a perspective view of a piece of hollow structured sheet of the kind set forth,
**Figure 2** shows a front section of the hollow structured sheet,
**Figures 3 to 6** show the main stages in a sealing process in accordance with the invention,
**Figure 7** shows a longitudinal cross-sectional view of a first sealed flute,
**Figure 8** shows a longitudinal cross-sectional view of a second sealed flute, and
**Figure 9** shows a cross-sectional view of a board which comprises a dividing layer.

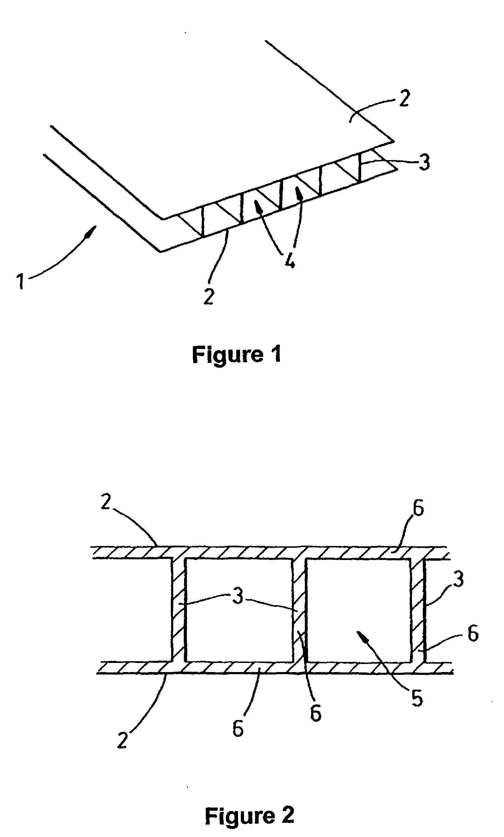

Figure 1 shows a perspective view of a portion of hollow structured sheet 1 of the kind set forth. The sheet 1 comprises spaced-apart parallel walls 2 and spaced-apart, parallel, transverse ribs 3 in the form of webs extending normal to and integrally connecting walls 2, the ribs 3 being formed integrally with walls 2 during extrusion of the sheet 1. The inner surface of the walls 2 and spaced-apart ribs 3 define therebetween parallel flutes 4. In the sheet 1 the spaced-apart ribs 3 run parallel to one another and are also equally spaced from one another. At distal ends of the flutes 4, there are defined openings 5, see Figure 2. More specifically, the openings 5 are defined by a surrounding mouth surface 6.

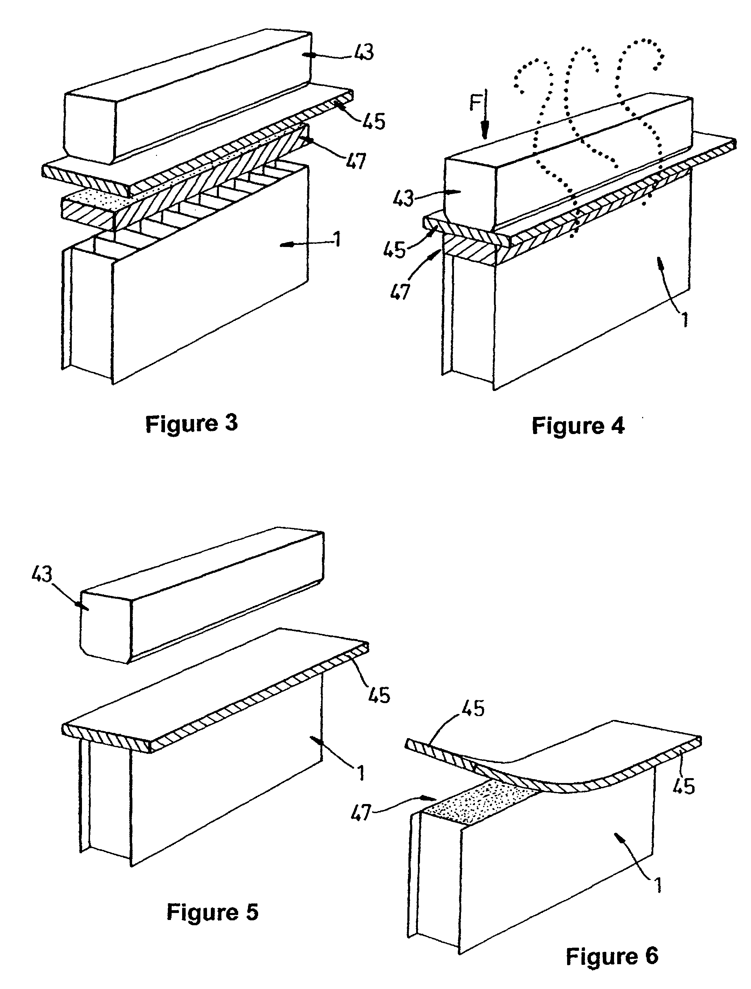

The principal stages of sealing the openings by the exemplary method in accordance with the invention are shown in Figures 3 to 6. Figure 3 shows welding means 43, a portion of protective sheet material 45, a portion of sealing material 47 and a section of structured sheet 1. Here the welding means is provided by a heating platen 43. As shown in Figure 3, the protective material 45 is placed between the sealing material 47 and the heating platen 43. The protective material 45 is a heat tolerant material which ensures that during welding no melted sealing material comes into contact with the heating platen 43. The sealing material 47 is polypropylene, when the structured sheet 1 is of polypropylene.

Referring to Figures 4 and 5, the openings are sealed in the following manner. First the heating platen 43 is heated to a temperature of at least 165°C, by means for example of an electrical resistance heater housed within platen 43. The platen 43 is desirably thermostatically controlled.

The sealing material 47 is then sandwiched between the protective material 45 and the heating platen 43 on one side and the mouths of the openings on the other side. The sealing material 47 is held firmly in this position for a predetermined time, with the application of a holding force indicated by the arrow F in Figure 4. That is, a holding force is applied so as to urge the sealing material 47 and structured sheet relatively together, in a direction normal to the margin of the structured sheet. The required time is in part dependent on the thickness of the sealing material 47. After this time the sealing material 47 will have melted onto the surrounding mouth surface of the openings and/or into the openings themselves. The heating platen 43 is then moved away from the sheet 1 and protective material 45, as shown in Figure 5, to allow the sealing material 47 to cool.

In order to accelerate the cooling process a cold platen, not shown, could be brought into contact with the material 45, or cold air jets, or other suitable cooling means, may be employed.

As shown in Figure 6, the protective material 45 is peeled from the sheet 1, once the sealing material 47 has set.

If necessary the sequence of steps shown in Figures 3 to 6 is then repeated so that any remaining adjacent openings are sealed.

In order to ensure that the openings are fully sealed, the strip of sealing material 47 can be made wider than the overall thickness of sheet 1, and the strip of material 47 may be positioned to overlap the opposite faces of sheet 1. The overlapping portions of material 47 can be removed after the sealing material 47 has set. The overlapping portions can be torn away in the case of polycarbonate, but need to be cut away in the case of polypropylene.

For example, a sealing strip 47 of width 670 mm may be employed with structured sheet of overall thickness of 650 mm.

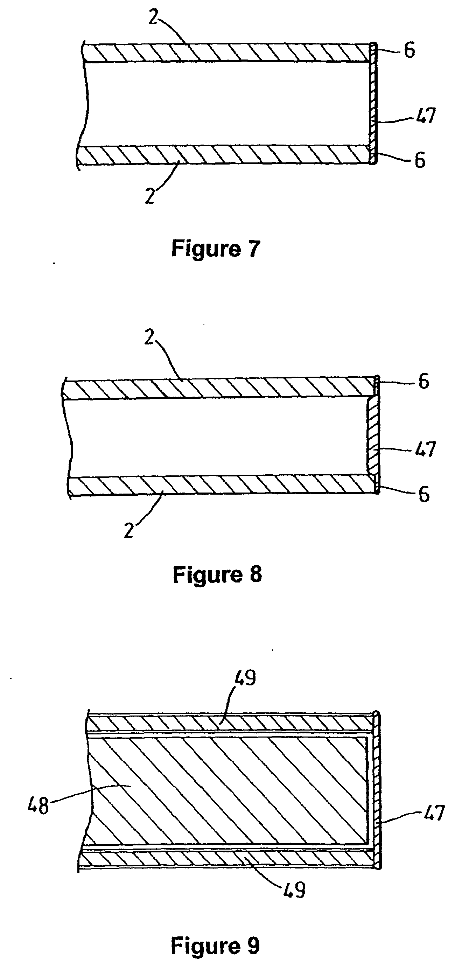

Figure 7 shows a section of flute that has been sealed by welding the sealing material 47 onto the surrounding mouth surface 6. Figure 8 shows a section of a flute in which the sealing material 47 has also been depressed into the opening.

It will be appreciated that apparatus may be arranged to seal the openings of a stack of such structured sheets at the same time. Single structured sheets or groups of structured sheets would be separated by partitions in the stack and subsequently sealed by a single band of sealing material that is enough to extend for the height of the stack. The partitions would facilitate the operation of separating each board from the stack of boards. (Although the term 'stack' has been used, it should be appreciated that the stack does not need to be oriented vertically during sealing.)

Where the board comprises a plurality of sheets, it has been found that if the sheets are placed in register during sealing, not only are the openings sealed microscopically but the sheets also become rigidly attached to each other around the edges. The strength of such boards is improved if the ribs 3 of adjacent boards are set at different orientations, for example, when the board consists of two structured sheets the ribs of each sheet are set at 90° to each other. When two sheets are sealed in such a manner the resulting board may be used as the load-supporting platform of a pallet. It is envisaged that feet for such a pallet may be attached using an adaptation of the sealing process previously described.

Yet a further application of the invention is to the sealing of structured sheets wherein at least two layers 49 of structured sheets are separated by a dividing layer 48, as shown in Figure 9 to create a relatively thick board. The dividing layer 48 may be one with good insulating properties such as expanded polystyrene (EPS). The width of the sealing strip 47 corresponds substantially to the combined thickness of the layers 49 and the dividing layer 48. Thus, insulating board is produced which is strong, lightweight and hygienic. For added strength each of the layers 49 may comprise a plurality of structured sheets, all held together by the strip 47.

Polycarbonate roofing sheets used for conservatory roofs often comprise three or four parallel walls 2 with spaced-apart ribs in the form of webs connecting adjacent walls. The sealing process described with reference to Figures 3 to 5 can be used to seal the margin of such roofing sheets. The applied sealing material will simultaneously seal with the mouth surfaces surrounding all of the openings which open to a length of the margin of the sheet. In general it may suffice to seal that margin of the roofing sheet that is uppermost on a pitched conservatory roof (the sheet being oriented with the flutes extending down the slope) but, if desired, the upper and lower margins may both be sealed utilising the inventive process.

## Claims

1. A method of sealing openings in or associated with a hollow structured sheet (1) of the kind comprising a plurality of spaced-apart parallel walls (2) and a plurality of spaced-apart ribs (3) which serve to maintain the spatial relationship between the walls, the spaced-apart ribs and the inner surfaces of the walls defining flutes (4), **characterised in that** the openings (5) are sealed by simultaneously heating a portion of sealing material and urging the portion of sealing material and the sheet relatively together.

2. A method as claimed in claim 1, **characterised in that** the openings (5) open to the margin of the structured sheet, and the sealing material and the structured sheet are urged relatively together by a holding force (F) acting substantially normally of the margin.

3. A method as claimed in claim 1 or claim 2, **characterised in that** a plurality of structured sheets are sealed simultaneously, the structured sheets being positioned in register with one another.

4. A method as claimed in claim 3, **characterised in that** the flutes of adjacent sheets are at different orientations.

5. A method as claimed in any one of the preceding claims, **characterised in that** a heated platen (43) is used to seal the openings.

6. A method as claimed in claim 5, **characterised in that** there is positioned between said portion of sealing material and said heated platen a portion of protective material (45) which ensures that melted sealing material does not come into contact with the platen.

7. A method as claimed in claim 6 in which the protective material (45) is left in position for a predetermined time following removal of the heated platen.

8. A method as claimed in claim 5, **characterised in that** the platen is coated with a suitable non-stick material.

9. A method as claimed in any of the preceding claims, **characterised in that** the sealing material (47) is of substantially the same chemical composition as that of the structured sheet.

## Patentansprüche

1. Verfahren zum Abdichten von Öffnungen in oder in Verbindung mit einer hohlen strukturierten Schicht (1) von der Art, die eine Vielzahl voneinander beabstandeter paralleler Wandungen (2) und eine Vielzahl voneinander beabstandeter Rippen (3) aufweist, die dazu dienen, die räumliche Beziehung zwischen den Wandungen aufrechtzuerhalten, wobei die voneinander beabstandeten Rippen und die Innenflächen der Wandungen Leerräume (4) definieren, **dadurch gekennzeichnet, dass** die Öffnungen (5) dadurch dicht verschlossen werden, dass gleichzeitig ein Abschnitt des Dichtungsmaterials erwärmt und der Abschnitt des Dichtungsmaterials und die Schicht relativ zueinander gedrückt werden.

2. Verfahren nach Anspruch 1, **dadurch gekennzeichnet, dass** die Öffnungen (5) sich zum Rand der strukturierten Schicht hin öffnen, und dass das Dichtungsmaterial sowie die strukturierte Schicht relativ zueinander mit einer Haltekraft (F) gedrückt werden, die im wesentlichen senkrecht zum Rand wirksam ist.

3. Verfahren nach Anspruch 1 oder 2, **dadurch gekennzeichnet, dass** eine Vielzahl strukturierter Schichten gleichzeitig abgedichtet wird, wobei die strukturierten Schichten in Deckung zueinander positioniert werden.

4. Verfahren nach Anspruch 3, **dadurch gekennzeichnet, dass** die Leerräume benachbarter Schichten unterschiedliche Ausrichtungen besitzen.

5. Verfahren nach einem der vorhergehenden Ansprüche, **dadurch gekennzeichnet, dass** eine erwärmte Walze (43) verwendet wird, um die Öffnungen dicht zu verschließen.

6. Verfahren nach Anspruch 5, **dadurch gekennzeichnet, dass** zwischen dem Abschnitt des Dichtungsmaterials und der erwärmten Walze ein Abschnitt eines Schutzmaterials (45) positioniert wird, welches sicherstellt, dass schmelzflüssig gemachtes Dichtungsmaterial nicht mit der Walze in Berührung kommt.

7. Verfahren nach Anspruch 6, bei welchem das Schutzmaterial (45) über eine vorgegebene Zeit nach Entfernung der erwärmten Walze in seiner Position belassen wird.

8. Verfahren nach Anspruch 5, **dadurch gekennzeichnet, dass** die Walze mit einem geeigneten und nicht klebenden Material beschichtet ist.

9. Verfahren nach einem der vorhergehenden Ansprüche, **dadurch gekennzeichnet, dass** das Dichtungsmaterial (47) im Wesentlichen die gleiche chemische Zusammensetzung wie die strukturierte Schicht besitzt.

## Revendications

1. Procédé d'étanchéification d'ouvertures dans ou associées à une feuille structurée creuse (1) du type comprenant une pluralité de parois parallèles (2) espacées et une pluralité de nervures (3) espacées qui servent à maintenir la relation spatiale entre les parois, les nervures espacées et les surfaces internes des parois définissant des cannelures **(4), caractérisé en ce que** les ouvertures **(5)** sont rendues étanches par chauffage simultané d'une portion d'un matériau d'étanchéité et pression de la portion du matériau d'étanchéité et de la feuille l'une contre l'autre.

2. Procédé selon la revendication 1, **caractérisé en ce que** les ouvertures **(5)** débouchent dans le bord de la feuille structurée, et le matériau d'étanchéité et la feuille structurée sont pressés l'un contre l'autre au moyen d'une force de retenue (F), agissant sensiblement normalement, du bord.

3. Procédé selon la revendication 1 ou la revendication 2, **caractérisé en ce qu'**une pluralité de feuilles structurées sont rendues étanches simultanément, les feuilles structurées étant positionnées de façon à coïncider entre elles.

4. Procédé selon la revendication 3, **caractérisé en ce que** les cannelures de feuilles adjacentes ont des orientations différentes.

5. Procédé selon l'une des revendications précédentes, **caractérisé en ce qu'**on utilise une plaque chauffée (43) pour rendre étanches les ouvertures.

6. Procédé selon la revendication 5, **caractérisé en ce qu'**une portion de matériau protecteur (45), qui garantit que le matériau d'étanchéité fondu ne vienne pas au contact de la plaque, est positionnée entre ladite portion de matériau d'étanchéité et ladite plaque chauffée.

7. Procédé selon la revendication 6, dans lequel on laisse le matériau protecteur (45) en place pendant un temps prédéterminé après le retrait de la plaque chauffée.

8. Procédé selon la revendication 5, **caractérisé en ce que** la plaque est revêtue d'une matière non collante appropriée.

9. Procédé selon l'une des revendications précédentes, **caractérisé en ce que** le matériau d'étanchéité **(47)** a sensiblement la même composition chimique que celle de la feuille structurée.
